# EUROPEAN PATENT SPECIFICATION

(11) **EP 1 970 150 B1**
(45) Date of publication and mention of the grant of the patent: **26.10.2011**
(21) Application number: 07103934.1
(22) Date of filing: 12.03.2007
(51) Int. Cl.: B23H 7/10

(54) **Spent wire guide for use in an electric discharge machine**
Führung für gebrauchten Draht für eine elektrische Drahterodiermaschine
Guide-fil pour une machine d'usinage par décharge électrique

(43) Date of publication of application: 17.09.2008
(73) Proprietor: Agie Charmilles SA, 6616 Losone (CH)
(72) Inventor: Grandjean, Michel Marcel Robert, 1233 Lully/Bernex (CH)
(74) Representative: De Colle, Piergiacomo

(56) References cited:
- JP-A- 5 301 122
- JP-A- 63 207 526
- US-A- 6 011 231
- US-B1- 6 815 630

## Description

The present invention relates to a spent wire guide for use in an electric discharge machine according to the preamble of claim 1. Such a spent wire guide is known from EP 1 602 433 A1.

In an electric discharge machine the wire is used as a moving tool to machine a metal work piece by means of electro-erosion. The wire is running at a constant speed and at a constant narrow distance in parallel to the work piece to be machined. Changes in distance and speed will have an effect on the surface quality of the work piece.

In EP 1 602 433 A1 there is disclosed a spent wire guide serving to route the spent wire in a wire electrical discharge machine. The wire guide is arranged upstream of the driving rollers. The wire guide has a funnel-shaped entry as well as a concave surface having a V-shaped slide way to guide the spent wire along one of the driving rollers. The wire guide has a rather complex shape. The wire guide has a plane of symmetry that is arranged perpendicular to the axis of rotation of the driving rollers. After leaving the machining zone the wire is being deflected first on one side while passing an electrical current contact and again on the other side while passing along one of the driving rollers. Downstream of the driver rollers the spent wire enters another guide, where the wire is cut or chopped into small elements.

Based on this prior art it is an object of the invention to specify a spent wire guide in an electric discharge machine that has the longest possible service life, that is easier to manufacture and to replace and that has a favourable effect on the movement of the wire on its path and therefore on the surface quality of the machined work piece.

The foregoing object is achieved by a spent wire guide in accordance with claim 1.

It is advantageous that the movement of the wire will be as smooth as possible and without drastic velocity changes. This is achieved by the spent wire guide being arranged vertically above the two driving rollers. By the arrangement of a spent wire guide upstream to the driving rollers the movement of the wire in the machining zone will not be affected by the handling of the wire after having passed the driving rollers. By the vertical arrangement of the spent wire guide the wire can move freely in the vertical sense and will not be affected by gravity.

An exemplary embodiment of the invention is described with reference to the figures. In the drawing:
FIG. 1 shows a perspective view of a lower head of an electro-erosion machine with the spent wire guide according to the invention,
FIG. 2 shows a perspective detailed view of the spent wire guide according to the invention,
FIG. 3 shows a perspective detailed view of the spent wire guide in FIG. 2 seen from the opposite side,
FIG. 4 shows a further embodiment of the invention and
FIG. 5 shows a cross section through the spent wire guide in FIG. 4.

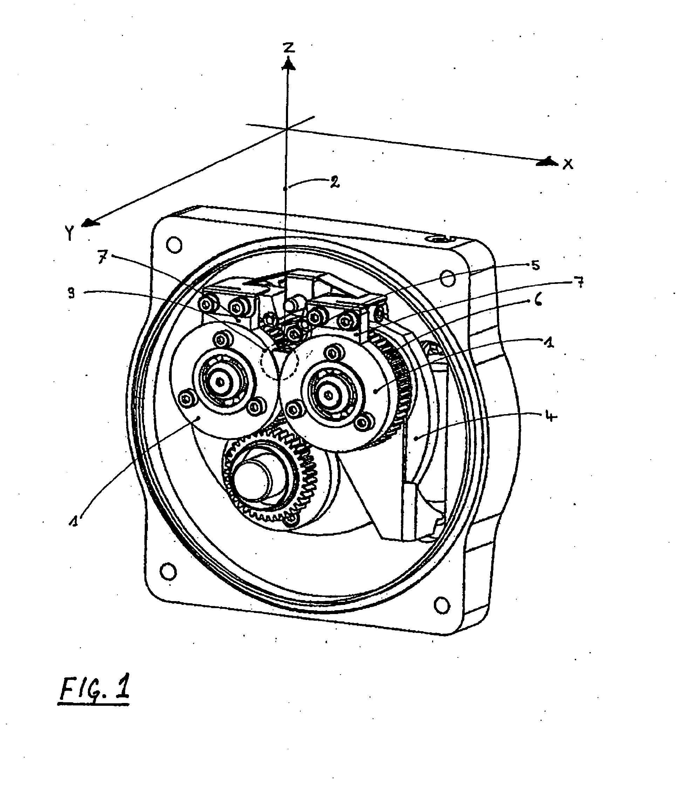

FIG. 1 is an overview of a model of a lower machining head with its bonnet cover removed. This type of lower head was developed for wire electro erosion machines of the ROBOFIL- family models 240, -440 and -640. Other types of lower head corresponding to other technical requirements are also available with the ROBOFIL family as it will be seen. In our present case, the wire 2 leaves the machining zone being guided by a precision wire guide, not represented here.

The wire 2 enters the lower head vertically along the Z-axis of the wire 2 and crosses a spent wire guide 3 having a whistle-shaped funnel portion 34 that is narrowly inserted between two cylindrical driving rollers 1. Between the precision wire guide located in the machining zone lying upstream and the spent wire guide 3, the wire 2 does not meet any obstacle. The two rollers 1 are identical and are arranged symmetrically, horizontally and in mutual contact relative to each other, touching each other at a contact line perpendicular to the Z-axis of the spent wire 2.

At the exit of the wire guide 3, the wire 2 is immediately captured by the rollers 1 which are arranged immediately vertically downstream of the wire guide 3, which grip it and force it to progress downwards. The funnel portion 34 belongs to an inseparable part 3 that also includes an intermediate arm 33 and a base portion 30. This last base portion 30 is adjusted and fixed precisely and rigidly on a chassis plate 4 using a screw nut 5.

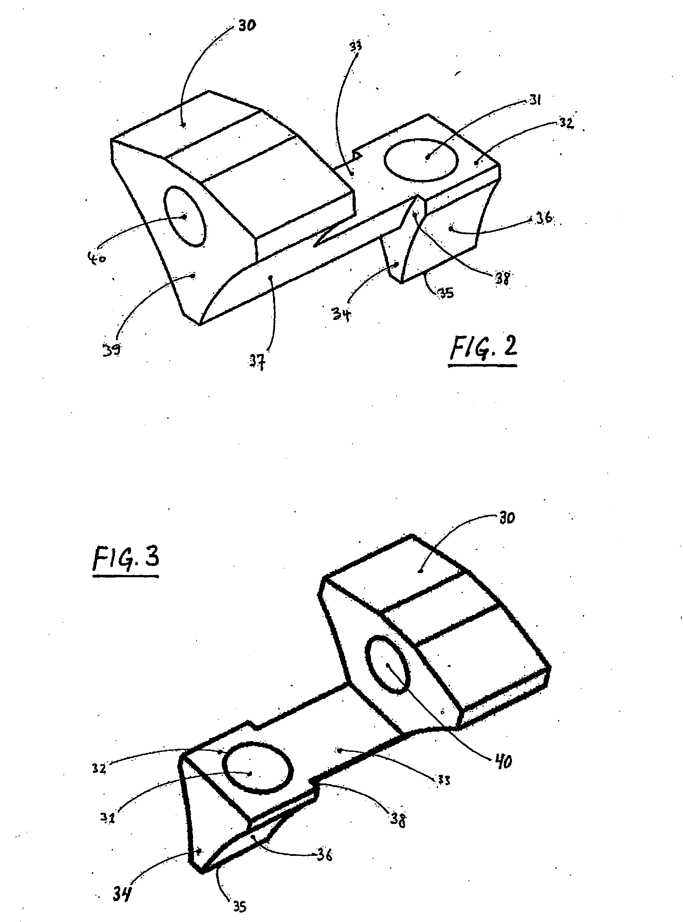

In FIG. 2 and FIG. 3 the spent wire guide 3 is shown in detail in two perspective views. The aforementioned inseparable part 3 comprises a symmetry plane which, after a correct installation inside the whole mechanical system, must pass by the line of contact between the cylinders that build the two driving rollers 1. The latter are two identical cylinders of radius e.g. 25 mm whose axes of rotation are parallel to the Y-axis. They are in contact one with the other on a line crossed perpendicularly by the wire 2. The wire 2 gripped between the two rollers 1 is pulled by the rotation. These rollers 1 are rotated by toothed wheels 6 which gear the ones with the others according to a known technique.

The receptacle of the conical funnel 32 has the shape of a whistle 34 whose nozzle 35 must come near the aforesaid contact line so that the wire is not likely to escape the rollers 1 laterally. The part at the origin of the invention must be accurately installed between the two rollers 1 and in their immediate proximity. It must thus reproduce in hollow the cylindrical shape of the rollers 1. In fact the whistle 34 comprises two cylindrical concave surfaces 36 of radius e.g. 26.5 mm which must come parallel to the rollers 1 when it is installed. The two other components of this inseparable piece i.e. the intermediate arm 33 and the base 30, also comprise cylindrical concave surfaces 37 which allow the passage of the toothed wheels 6 that are installed coaxially to the rollers 1.

The top diameter of the teeth of the aforementioned wheels 6 being higher than the diameter of the rollers it's the reason for which one observes a setback 38 of approximately 1 mm between the concave surfaces 37 of the whistle 36 and of the intermediate arm 33. The two withdrawn concave surfaces 37 of the intermediate arm 33 and of the base 30 have a radius of e.g. approximately 27.5 to 28 mm. The base 30 itself comprises a support face 39 perpendicular to the said symmetry plane and a drilled bore 40 crossing the support face 39 perpendicular to it, this last making it possible to fasten it rigidly to the mounting base 4 which receives all elements of the wire traction device.

Because of the geometry of the rollers 1, the wire 2 can move freely according to the Y direction, all at least at the beginning when the rollers 1 are new. Later on, the friction of the wire 2 against stainless steel brings wear on the guiding surfaces at the exit of the whistle 34. Two deep furrows, where the wire 2 is likely to be trapped, are formed in the direction Y on both sides of the nozzle 35 at the exit of the funnel 31. The parasitic movements of the wire 2 according to Y are then reflected lower on the level of the rollers 1.

In a normal operation of the system, the wire 2 prints a narrow and not very deep notch around the rollers 1 within the first operating hours. This notch in the rollers 1 takes part effectively in the guidance of the wire until it becomes too deep. The operator is given the possibility, approximately every 1000 machining hours, to shift or to turn over the rollers 1 so as to print a same guiding notch at a different place spaced from a few millimetres. Such operations are planned in the maintenance procedures of the machine and make it possible to prolong considerably the lifespan of the rollers 9 .

Instead of that normal operation and owing to the said early deterioration of the funnel 31, 35 the wire 2 is not limited in its Y excursions and digs an excessively broad and irregular furrow in the rollers 1, what can go until to make that the wire 2 escapes the capture by the rollers 1. It follows the phenomena of accumulation of wire (stuffing) in the lower head producing unpleasant interruptions and deteriorations of the installation.

The bad guidance of the wire 2, its jerked and uncontrolled movements, produces crippling anomalies in the form of scratches on the machined surface on the part being machined. These scratches are caused by the disturbances induced on the wire 2 at the level of the rollers 1; disturbances which are reflected in the form of parasitic vibrations upstream in the machining zone.

Another disadvantage of electric nature is as follows. In this model of lower head, the machining current is conveyed by two brush contacts 7 as seen in FIG. 1, transmitting the current to the rollers 1, which create a perfect and stable electrical contact with the wire 2. The inevitable contacts of the wire 2 with the stainless steel guide 3 create leakage currents which unbalance the distribution of the currents on one and the other brush contacts 7. The wear of one or the other brush contacts will then be accelerated. In addition, the accidental contacts of the wire 2 with the stainless steel guide 3 modifies the impedance (self induction) of the equivalent discharge circuit thus disturbing the erosive current impulses between the wire 2 and the machined work piece.

Finally it must be quoted that the cone funnel 31, 35 made of stainless steel does not worsen only because of friction but also undergoes an abnormal oxidation effect by electrolysis which deteriorates its surface quality. Ultimately excessive roughness and the irregularity of the guide tracks take part to create vibrations harmful to the process. The goal of the invention is to eliminate the disadvantages stated above by introducing into the usual part 3, represented on FIG. 2 and 3, a material very resistant to wear and simultaneously not conducting the electricity.

In this type of wire guide 3 the wire 2 does not receive guidance, in the form of an electrical current contact arranged upstream of the spent wire guide, as disclosed in the above described document EP 1 602 433 A1. The spent wire guide 3 allows a smooth and constant rectilinear movement of the wire 2. The wire 2 is not deflected from its vertical path by any other rollers, is always running vertically, does not need to pass any obstacles and does not undergo deflections during its evacuation.

Deflecting the wire 2 from the vertical would inevitably introduce mechanical disturbances. On the contrary in the case of the present invention, the wire 2 enters vertically between the two rollers 1. Evacuating the wire 2 vertically eliminates a great part from the harmful disturbances to precision machining. The electrical contact that brings the current for machining is usually a major source of mechanical disturbances on the wire 2. Supplying current onto the rollers 1 reduces said disturbances. Therefore the surface quality of the work piece will be more equal and homogeneous than with other wire threading arrangements.

The operation of chopping the wire 2 with the shocks that it produces is also a major source of mechanical disturbances. In the case of the present invention the vertical evacuation of the wire 2 makes it possible to push back the operation of chopping as far as possible off the machining zone.

The spent wire 2 only has freedom of movement in the Y-direction and thereby could damage the surface of the wire guide 3 particularly in the region of the funnel outlet 35. The funnel outlet 35 needs to provide a permanent guiding function to the wire 2.

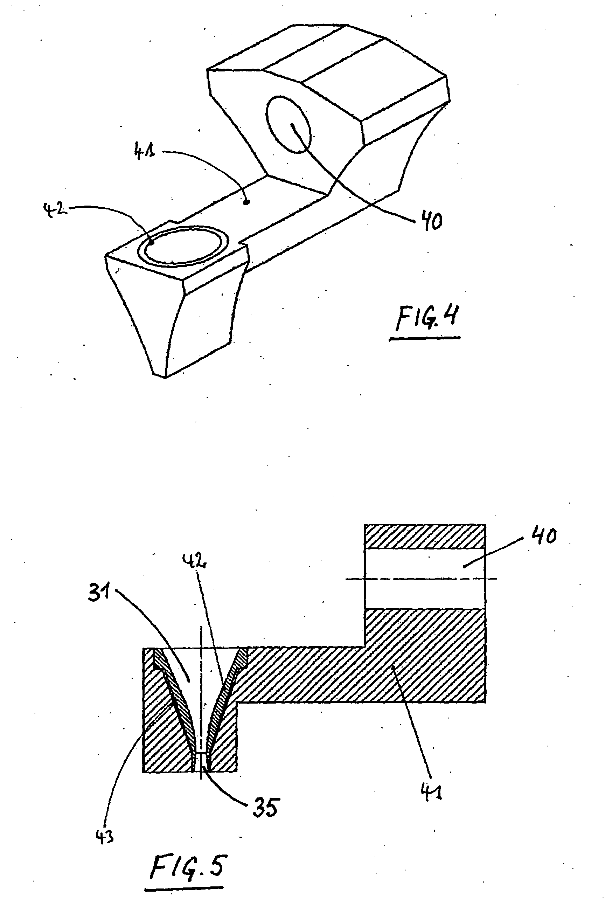

The adopted solution represented in FIG. 4 consists in preserving the body 41 of the part 3 such as designed originally out of stainless steel and to insert in it a guiding cone 42 made out of non conducting ceramics. Therefore the spent wire guide 3 will undergo less wear and will have a longer service life. The funnel 42 may be made of ceramics of the type having Zirconia as a base element. The option of a cast solid ceramics part was put in comparison but was not retained: too much fragile, too expensive.

The new spent wire guide 3 is planned to withstand approximately 2000 hours. Moreover provisions are taken to let the user carry out itself the replacement. The spent wire guide 3 will be sold separately as a spare part. The wire guide 3 will undergo less wear due to excessive abrasion.

By fixing adequate tolerances between ceramics insert 42 and stainless steel body 41 one can leave enough play 43 allowing sticking with glue. Such an operation is well adapted to the situation because the efforts take place to the bottom and no effort of wrenching to the top of the funnel 31 is to be feared. Such a technique is easier to control by the manufacturer and does not require returning to a specialist.

The body 41 is made of a stainless not hardened steel of type X10CrNiS18.9. It proved that hardened stainless steel may be vulnerable to corrosion in the present environment. The introduction of a non conducting ceramics insert allows eliminating the operation of hardening the stainless steel.

Since the spent wire guide 3 becomes an element which the customer must replace periodically, it is envisaged to facilitate the task, i.e. to avoid tiresome adjustments. For that we envisage an execution comprising at least two pin holes in the base portion 30 parallel with the clamp hole 40.

## Claims

1. Spent wire guide (3) for use in an electric discharge machine suitable to be arranged downstream of the machining zone of the electric discharge machine upstream of a zone for collecting, recovering and/or further handling a spent wire (2),
immediately upstream of two identical and symmetrically arranged driving rollers (1)
arranged horizontally and in mutual contact relative to each other, so that an horizontal contact line is built, and
centrally above the two driving rollers (1),
where the spent wire guide (3) comprises a vertical symmetry plane which, when arranged in the electric discharge machine, includes the contact line of both driving rollers (1),
- the spent wire guide (3) is a single inseparable piece consisting essentially of a funnel portion (34), an intermediate portion (33) and a base portion (30) forming a body,
- the funnel portion (34) comprises concave surfaces (36) ending up in a whistle-shaped nozzle (35) suitable to be arranged close to the contact line of the two driving rollers (1), when mounted in the electric discharge machine are arranged
- the concave surfaces (36) are arranged concentric and when mounted in the electric discharge machine are arranged coaxially with the axes of rotation of both driving rollers (1) which are arranged rotating on horizontal axes of rotation parallel to said symmetry plane,
**characterized in that** the body (34, 33, 30) of the spent wire guide (3) is made of a stainless not hardened steel
- and that the funnel portion (34) comprises a guiding cone (42) made of a non conductive ceramic.

2. Spent wire guide (3) according to claim 1, **characterized in that** the guiding cone (42) has an outside dimension smaller than the inside dimension of the funnel portion (34) thereby leaving a gap (43) in such a way that the funnel (42) may be fixed by gluing inside the funnel portion (34).

3. Spent wire guide (3) according to claim 1, **characterized in that** the guiding cone (42) is made of a non conductive ceramic of the type having Zr as the base element.

4. Spent wire guide. (3) according to claim 1, **characterized in that** the used stainless steel is of the type X10CrNiS18.9.

5. Spent wire guide (3) as claimed according to claim 1, **characterized in that** at least two pin holes are bored in the base portion (30) in order to facilitate replacement and adjustment tasks.

## Patentansprüche

1. Führung (3) für gebrauchten Draht zur Verwendung in einer elektrischen Drahterodiermaschine, geeignet, um hinter der Bearbeitungszone der elektrischen Drahterodiermaschine angeordnet zu werden, vor einer Zone zum Sammeln, Wiedergewinnen und/oder weiteren Bearbeiten eines gebrauchten Drahts (2),
unmittelbar vor zwei identischen und symmetrisch angeordneten Antriebswalzen (1),
horizontal und in gegenseitigem Kontakt zueinander angeordnet, so dass eine horizontale Kontaktlinie errichtet wird, und
zentral über den beiden Antriebswalzen (1), wobei
- die Führung (3) für gebrauchten Draht eine vertikale Symmetrieebene umfasst, die bei Anordnung in der elektrischen Drahterodiermaschine die Kontaktlinie von beiden Antriebswalzen (1) enthält,
- die Führung (3) für gebrauchten Draht ein einzelnes untrennbares Stück ist, das im Wesentlichen aus einem Trichterabschnitt (34), einem Zwischenabschnitt (33) und einem Basisabschnitt (30) besteht, einen Körper bildend,
- der Trichterabschnitt (34) konkave Oberflächen (36) umfasst, die in einer pfeifenförmigen Düse (35) enden, geeignet dazu, nahe der Kontaktlinie der beiden Antriebswalzen (1) angeordnet zu werden,
- die konkaven Oberflächen (36) konzentrisch angeordnet sind und bei Montage in der elektrischen Drahterodiermaschine koaxial zu den Drehachsen von beiden Antriebswalzen (1) angeordnet sind, die ausgelegt sind, sich auf horizontalen Drehachsen parallel zu der Symmetrieebene zu drehen,
**dadurch gekennzeichnet, dass** der Körper (34, 33, 30) der Führung (3) für gebrauchten Draht aus rostfreiem, nicht gehärtetem Stahl hergestellt ist,
- und dass der Trichterabschnitt (34) einen Führungskegel (42) umfasst, der aus einer nicht leitenden Keramik hergestellt ist.

2. Führung (3) für gebrauchten Draht nach Anspruch 1, **dadurch gekennzeichnet, dass** der Führungskegel (42) eine Außenabmessung aufweist, die kleiner ist als die Innenabmessung des Trichterabschnitts (34), wobei ein Spalt (43) derart zurückbleibt, dass der Trichter (42) durch Kleben in den Trichterabschnitt (34) fixiert werden kann.

3. Führung (3) für gebrauchten Draht nach Anspruch 1, **dadurch gekennzeichnet, dass** der Führungskegel (42) aus einer nicht leitenden Keramik von dem Typ Zr als Basiselement hergestellt ist.

4. Führung (3) für gebrauchten Draht nach Anspruch 1, **dadurch gekennzeichnet, dass** der verwendete rostfreie Stahl von dem Typ X10CrNiS18.9 ist.

5. Führung (3) für gebrauchten Draht nach Anspruch 1, **dadurch gekennzeichnet, dass** mindestens zwei Stiftlöcher in den Basisabschnitt (30) gebohrt sind, um Austausch- und Justieraufgaben zu erleichtern.

## Revendications

1. Guide de fil utilisé (3) pour usage dans une machine d'usinage par décharge électrique, adapté pour être agencé en aval de la zone d'usinage de la machine d'usinage par décharge électrique, en amont d'une zone de collecte, de récupération et/ou de manipulation supplémentaire d'un fil utilisé (2), immédiatement en amont de deux rouleaux d'entraînement identiques agencés de façon symétrique (1) ainsi qu'horizontalement et en contact mutuel l'un par rapport à l'autre, de telle sorte qu'une ligne de contact horizontale soit formée, et de façon centrale au-dessus des deux rouleaux d'entraînement (1), dans lequel:
le guide de fil utilisé (3) présente un plan de symétrie vertical qui, lorsque le guide-fil est agencé dans la machine d'usinage par décharge électrique, contient la ligne de contact des deux rouleaux d'entraînement (1);
le guide de fil utilisé (3) est une seule pièce inséparable consistant essentiellement en une partie d'entonnoir (34), une partie intermédiaire (33) et une partie de base (30) formant un corps;
la partie d'entonnoir (34) présente des surfaces concaves (36) qui se terminent dans une buse en forme de sifflet (35) qui est adaptée pour être agencée à proximité de la ligne de contact des deux rouleaux d'entraînement (1); et
les surfaces concaves (36) sont agencées de façon concentrique et, lorsque le guide-fil est monté dans la machine d'usinage par décharge électrique, de façon coaxiale par rapport aux axes de rotation des deux rouleaux d'entraînement (1) qui sont agencés de manière à tourner sur des axes de rotation horizontaux parallèles audit plan de symétrie,
**caractérisé en ce que** le corps (34, 33, 30) du guide de fil utilisé (3) est constitué d'un acier inoxydable non durci;
et **en ce que** la partie d'entonnoir (34) comprend un cône de guidage (42) qui est constitué d'une céramique non conductrice.

2. Guide de fil utilisé (3) selon la revendication 1, **caractérisé en ce que** le cône de guidage (42) présente une dimension extérieure qui est plus petite que la dimension intérieure de la partie d'entonnoir (34), laissant de ce fait un espace (43) de telle sorte que l'entonnoir (42) puisse être fixé par collage à l'intérieur de la partie d'entonnoir (34).

3. Guide de fil utilisé (3) selon la revendication 1, **caractérisé en ce que** le cône de guidage (42) est constitué d'une céramique non conductrice du type comprenant le Zr comme élément de base.

4. Guide de fil utilisé (3) selon la revendication 1, **caractérisé en ce que** l'acier inoxydable utilisé est du type X10CrNiS18.9.

5. Guide de fil utilisé (3) selon la revendication 1, **caractérisé en ce qu'**au moins deux trous d'épingle sont percés dans la partie de base (30) dans le but de faciliter les tâches de remplacement et de réglage.
